(19) Europäisches Patentamt / European Patent Office / Office européen des brevets

(11) **EP 1 984 716 B1**

(12) **FASCICULE DE BREVET EUROPEEN**

(45) Date de publication et mention de la délivrance du brevet:
**06.09.2017 Bulletin 2017/36**

(21) Numéro de dépôt: **07731635.4**

(22) Date de dépôt: **15.02.2007**

(51) Int Cl.:
*G01J 9/02* (2006.01)  *G01B 9/02* (2006.01)

(86) Numéro de dépôt international:
**PCT/FR2007/050810**

(87) Numéro de publication internationale:
**WO 2007/093748 (23.08.2007 Gazette 2007/34)**

(54) **PROCEDE D'ANALYSE DE SURFACE D'ONDE PAR INTERFEROMETRIE MULTILATERALE A DIFFERENCE DE FREQUENCE**

WELLENFRONTANALYSEVERFAHREN MIT MULTILATERIALER INTERFEROMETRIE MIT FREQUENZDIFFERENZ

WAVEFRONT ANALYSIS METHOD INVOLVING MULTILATERAL INTERFEROMETRY WITH FREQUENCY DIFFERENCE

(84) Etats contractants désignés:
**DE FR GB**

(30) Priorité: **16.02.2006 FR 0601362**

(43) Date de publication de la demande:
**29.10.2008 Bulletin 2008/44**

(73) Titulaire: **ONERA (Office National d'Etudes et de Recherches Aérospatiales)**
**91120 Palaiseau (FR)**

(72) Inventeurs:
• **PRIMOT, Jérôme**
  **F-92320 Châtillon (FR)**
• **VELGHE, Sabrina**
  **F-91140 Villebon-sur-Yvette (FR)**
• **GUERINEAU, Nicolas**
  **F-92160 Antony (FR)**
• **HAÏDAR, Riad**
  **F-75011 Paris (FR)**
• **TAUVY, Michel**
  **F-78180 Montigny Le Bretonneux (FR)**

(74) Mandataire: **Gevers & Orès et al**
**41 avenue de Friedland**
**75008 Paris (FR)**

(56) Documents cités:
**EP-A- 1 505 365**     **US-A- 4 832 489**
**US-A1- 2003 053 071**

EP 1 984 716 B1

**Description**

L'invention est destinée à l'analyse de la surface d'onde d'un faisceau de lumière.

Ce type d'analyse permet le contrôle des éléments optiques, ainsi que la qualification des appareils optiques. Il permet aussi l'étude des phénomènes physiques non directement mesurables, tels que les variations d'indice optique au sein de milieux turbulents que l'on rencontre à la traversée de l'atmosphère terrestre, ou bien dans une veine de soufflerie. De nombreuses autres applications sont envisageables tels que la métrologie et le contrôle des lasers classiques ou intenses.

Le type d'analyse de surface d'onde selon l'invention est basé sur l'utilisation d'un réseau de diffraction positionné sur le trajet du faisceau à analyser.

Pour la bonne compréhension de ce qui va suivre, un tel réseau est défini comme étant un dispositif optique introduisant des variations périodiques de phase et d'intensité. Tout réseau est ainsi caractérisé par la multiplication de deux fonctions : l'une, appelée fonction de phase, traduit les variations périodiques de phase introduites par le réseau et l'autre, appelée fonction d'intensité, traduit les variations périodiques d'intensité introduites par le réseau.

Conformément à son brevet d'invention FR 2712978, le demandeur rappelle le mode de constitution et la définition d'un réseau bidimensionnel. Un ensemble de points disposés régulièrement suivant deux directions constitue un maillage plan. Ces points définissent une maille élémentaire. La maille élémentaire est la plus petite surface permettant de réaliser un pavage non lacunaire du plan. Le polygone de la maille élémentaire est le polygone de surface minimale dont les côtés sont supportés par les médiatrices des segments reliant un point quelconque de l'ensemble à ses plus proches voisins. Un réseau bidimensionnel est la répétition à volonté d'un motif élémentaire disposé selon un maillage plan. Un maillage plan peut définir des mailles élémentaires hexagonales ou rectangulaires (les mailles carrées n'étant qu'un cas particulier de ces dernières).

Lorsqu'on éclaire un réseau de diffraction avec un faisceau de lumière, appelé faisceau incident, les faisceaux de lumière diffractés par le réseau peuvent être décrits comme des répliques du faisceau incident. Ils sont appelés sous-faisceaux, chacun correspondant à un ordre de diffraction du réseau.

Un traitement optique particulier des sous-faisceaux ainsi obtenus permet d'observer un interférogramme (l'image d'interférence) constitué par un maillage périodique de taches lumineuses. Si la surface d'onde incidente est plane, l'interférogramme issu de l'interférence des sous-faisceaux est appelée interférogramme original. Si la surface d'onde incidente n'est pas plane, l'interférogramme présente des déformations par rapport à l'interférogramme original, il est appelé interférogramme déformé. Les déformations de l'interférogramme déformé sont sensibles aux taux d'accroissement de la surface d'onde.

Le dénivelé en un point P(x, y, z) d'une surface S, $d_{u,d}(P)$, est défini comme étant la différence de hauteur z' entre deux points, situés de part et d'autre du point P, séparés d'une distance d selon une direction u. On appelle alors dénivelé d'une surface selon la direction u et une distance d, l'ensemble des points P' (x, y, z') résultant de la fonction $d_{u,d}(P)$ appliquée à tous les points P de cette surface. Cet ensemble de points P' définit une nouvelle surface, notée S'.

Le taux d'accroissement en un point P(x, y, z) d'une surface S, $t_{u,d}(P)$, est défini comme étant le dénivelé $d_{u,d}(P)$ obtenu en ce point P divisé par la distance d. On appelle alors taux d'accroissement d'une surface selon la direction u et une distance d, l'ensemble des points P'' (x, y, z'/d) résultant de la fonction $t_{u,d}(P)$ appliquée à tous les points P de cette surface. Cet ensemble de points P'' définit une nouvelle surface, notée S''. Lorsque la surface S est continue et si la distance d tend vers 0 alors la surface S'' tend vers le gradient de S selon la direction u. Il est possible de trouver une distance d suffisamment petite à partir de laquelle le taux d'accroissement d'une surface continue est très proche du gradient. Dans ce cas, on assimile gradient et taux d'accroissement.

Dans le domaine de l'analyse de surface d'onde, le fait d'assimiler le taux d'accroissement au gradient est très courant (D. Malacara, « Optical Shop Testing », Wiley-Interscience, 2nd Edition, p. 126-127).

Pour l'analyse d'une surface d'onde, on connaît l'analyseur dit de « Shack-Hartmann », décrit dans « Phase measurements systems for adaptive optics », J.C.Wyant, AGARD Conf. Proc., N°300, 1981. Le principe général consiste à conjuguer optiquement le défaut de phase à analyser avec une grille de micro-lentilles. Dans le plan commun des foyers des micro-lentilles, on observe une figure d'intensité constituée par un réseau de taches déformé suivant les taux d'accroissement de la surface d'onde. Une interprétation, basée sur une décomposition en sous-faisceaux diffractés par le réseau de micro-lentilles a été développée dans « Theoretical description of Shack-Hartmann wave-front sensor », J. Primot, Optics Communications, 2003.

Les analyseurs de surface d'onde dits de « Shack-Hartmann » ont l'avantage de fonctionner avec des faisceaux de couleur.

La couleur d'un faisceau est définie comme étant un mélange de rayonnements monochromatiques de longueurs d'onde différentes, dans des proportions fixées. Un rayonnement monochromatique est donc à considérer comme une couleur particulière.

Le rendement lumineux de ces analyseurs est proche du maximum ; par contre, la sensibilité et la dynamique ne sont réglables qu'en changeant la grille de micro-lentilles.

On connaît également les analyseurs interférométriques de surfaces d'onde à changement de phase dits à « phase-shift », décrits dans « Optical Shop Testing », D. Malacara, Wiley-Interscience, 2nd Edition, chapitre 14. La technique de l'interférométrie à phase-shift consiste à ajouter temporellement ou spatialement un déphasage connu sur l'un des bras, de manière à déterminer le taux d'accroissement d'une surface d'onde à partir de plusieurs interférogrammes. Ce dispositif, reposant généralement sur un interféromètre de type Michelson, est chromatique et ne peut donc mettre en oeuvre simultanément qu'une seule longueur d'onde. Il est cependant possible d'utiliser successivement plusieurs longueurs d'onde, comme il est décrit dans l'ouvrage susmentionné (p.560), afin de bénéficier d'une plus grande dynamique de mesure, et également de s'affranchir des erreurs d'offset de l'intensité des faisceaux lumineux. Un système combinant un interféromètre à phase-shift spatial et une mesure à deux longueurs d'onde est décrit dans le brevet d'invention EP 1 505 365.

Dans ses demandes de brevet FR 2712978 et FR 2795175, le Demandeur a décrit en particulier des interféromètres à décalage tri-latéral et quadri-latéral basé sur un réseau de diffraction, qui font partie de la famille des interféromètres à décalage latéral, famille distincte des interféromètres à phase-shift, et faisant l'objet d'une description dans le chapitre 4 de l'ouvrage cité ci-dessus (« Optical Shop Testing », D. Malacara, Wiley-Interscience, 2nd Edition, chapitre 4).

D'après l'approche par décomposition en sous-faisceaux, les interféromètres à décalage tri-latéral et quadri-latéral, le réseau de diffraction subdivise optiquement le faisceau à analyser en trois (tri-latéral) ou quatre (quadri-latéral) sous-faisceaux.

Un traitement optique particulier des sous-faisceaux ainsi obtenus permet d'observer un interférogramme constitué par un maillage périodique de taches lumineuses et étant sensible aux taux d'accroissement de la surface d'onde.

Dans les deux brevets du Demandeur cités ci-dessus, il est indiqué que ce résultat dépend du gradient, ce qui est similaire au taux d'accroissement dans le cas d'une surface d'onde continue.

L'analyse des taux d'accroissement peut se faire avec une possibilité d'ajustement continu de la dynamique et de la sensibilité. Il est également possible d'estimer l'erreur sur la mesure à partir de la mesure elle-même ; enfin, l'interférogramme obtenu est particulièrement adaptée à des techniques d'analyse basées sur des transformations de Fourier, ce qui lui confère simplicité et rapidité d'exécution par des moyens informatiques. De même que le Shack-Hartmann, ces interféromètres peuvent fonctionner avec des faisceaux de couleur et leurs rendements lumineux sont élevés.

Ces dernières années, de nouveaux besoins en matière de contrôle des optiques sont apparus. Les exigences de plus en plus élevées en terme de sensibilité radiométrique ou de résolution spatiale conduisent à réaliser des optiques de très grands diamètres constituées par l'apposition d'optiques élémentaires de plus petite taille suivant un maillage cartésien ou hexagonal. On parle alors d'optique segmentée. Un exemple particulièrement connu est le télescope Keck, formé par l'apposition de trente-six éléments hexagonaux. Ces nouveaux systèmes optiques requièrent un moyen de contrôle adapté qui permette la mise en forme de la surface globale, c'est-à-dire le positionnement précis des différents segments pour les ramener tous sur une même surface.

D'autre part, les opticiens recourent de plus en plus souvent à des composants optiques dits diffractifs, constitués de l'alternance de zones planes de différentes tailles et de différentes hauteurs. Celles-ci permettent de réaliser des fonctions optiques similaires aux composants classiques tels que lentilles et prismes, mais en présentant des caractéristiques spécifiques, en particulier en matière de chromatisme. Compte tenu de leurs formes particulières, ces éléments nécessitent des moyens de caractérisation adaptés.

Le point commun de ces deux exemples d'application est la nécessité d'analyser une surface morcelée afin d'en cartographier les transitions en position et hauteur, pour en déterminer les valeurs et/ou les modifier, ou pour simplement les vérifier.

Dans ce qui suit, on définira comme surface morcelée une surface constituée par l'apposition discontinue de morceaux de surfaces, de tailles éventuellement différentes, avec éventuellement des lacunes entre les morceaux, et présentant des dénivelés entre les morceaux. Puisque les surfaces morcelées ne sont pas continues, la surface résultante d'une opération de taux d'accroissement ne peut pas être assimilée au gradient.

La surface d'onde plane réfléchie par un miroir segmenté dont les segments élémentaires n'ont pas été repositionnés, ou transmise par un élément diffractif tel que défini ci-dessus sont des surfaces d'onde morcelées. Ces deux exemples d'application montrent donc l'intérêt de développer un moyen d'analyse de surface d'onde adapté à ces nouveaux besoins.

Dans le mode d'utilisation habituel, les analyseurs de surface d'onde dits de « Shack-Hartmann » ne permettent pas l'analyse de surfaces d'onde morcelées.

J.C. Chanteloup, dans l'article «Multiple-wave lateral shearing interferometry for wave-front sensing», Appl. Opt. 44, pp. 1559-1571 (2005) a constaté expérimentalement, que les interféromètres à décalage tri-latéral et quadrilatéral permettent l'analyse de surfaces morcelées présentant des dénivelés petits devant la longueur d'onde d'analyse. L'analyse de surfaces d'onde morcelées présentant des dénivelés supérieurs à la longueur d'onde d'analyse donne la position correcte des dénivelés mais leur hauteur est indéterminée puisqu'elle est donnée à la longueur d'onde près. Cette limitation est rédhibitoire pour les applications évoquées ci-dessus.

Il paraît donc vivement souhaitable d'avoir un analyseur permettant l'analyse de surfaces d'onde morcelées, sans limitation sur l'amplitude des dénivelés entre morceaux. La présente invention, basée sur l'utilisation d'un réseau de diffraction bidimensionnel, a pour but d'apporter une amélioration dans ce sens.

Un réseau de diffraction bidimensionnel permet d'observer, dans un plan d'observation, un interférogramme caractéristique de la surface d'onde du faisceau à analyser.

L'interférogramme observé est considéré selon l'invention comme la combinaison d'interférogrammes élémentaires. Il est toujours possible de décomposer un interférogramme en une série d'interférogrammes élémentaires, au moyen d'une transformée de Fourier par exemple.

Chaque sous-faisceau issu du réseau se propage selon la direction particulière de son ordre de diffraction. Il est alors possible de former des couples de sous-faisceaux, chaque sous-faisceau du couple ayant un ordre différent.

Les sous-faisceaux d'un couple se propagent selon les deux directions des ordres diffractés et se décalent au cours de la propagation. Ce décalage dans le plan d'observation est appelé décalage latéral. Chaque interférogramme élémentaire résulte de l'interférence de l'ensemble des couples de sous-faisceaux issus du réseau de diffraction ayant un même décalage latéral selon une même direction dans le plan d'observation. Les couples ayant un même décalage latéral selon une même direction dans le plan d'observation sont appelés couples iso-décalés. Les sous-faisceaux de tous les couples iso-décalés sont basculés l'un par rapport à l'autre d'un même angle appelé angle de basculement privilégié.

Le profil d'intensité d'un interférogramme élémentaire est constitué de franges quasi-rectilignes dont la direction perpendiculaire dans le plan d'observation est appelée direction privilégiée.

Si la surface d'onde de l'onde incidente est plane, l'interférogramme issu de l'interférence des sous-faisceaux est appelé interférogramme original et les interférogrammes élémentaires sont dit originaux. Chacun des interférogrammes élémentaires issus de l'interférence de l'ensemble des couples de sous-faisceaux iso-décalés présente alors un profil d'intensité purement sinusoïdal selon la direction privilégiée et dont la période p dépend de l'angle de basculement privilégié.

Si la surface d'onde de l'onde incidente n'est pas plane, l'interférogramme subit des déformations et est appelé interférogramme déformé et les interférogrammes élémentaires sont dit déformés. Les déformations dépendent des taux d'accroissement de la surface d'onde incidente selon les directions privilégiées et les décalages latéraux de tous les couples de sous-faisceaux présents.

Comme il est possible, au moyen d'un analyseur de surface d'onde à base de réseau de diffraction, d'analyser une surface d'onde, y compris une surface d'onde morcelée, à partir d'interférogrammes élémentaires, on considère une onde monochromatique avec une surface d'onde incidente à analyser sur un réseau monodimensionnel diffractant deux ordres.

L'onde est diffractée en deux sous-faisceaux qui se propagent selon les directions des deux ordres diffractés par le réseau. On observe l'interférogramme issu de l'interférence de ces deux répliques à une distance donnée du réseau.

Si l'onde incidente possède une surface d'onde à deux morceaux avec un dénivelé de hauteur h, le profil d'intensité de l'interférogramme élémentaire déformé est du même type que celui de l'interférogramme élémentaire original mais présente deux discontinuités qui bornent la zone du taux d'accroissement et entre lesquelles un fragment de la sinusoïde originale a été translatée spatialement.

La largeur du fragment est égale au décalage latéral entre les deux sous-faisceaux du couple étudié à la distance d'observation. Le décalage en translation spatiale $S_i$ du profil d'intensité par rapport à celui de l'interférogramme élémentaire original est lié à la période p de la sinusoïde, à la longueur d'onde d'analyse $\lambda_i$ et à la hauteur h du dénivelé par la relation :

$$s_i = \frac{hp}{\lambda_i} - \left[\text{Partie Entière}\left(\frac{h}{\lambda_i}\right)\right]p \qquad (1)$$

La valeur de $S_i$ est donc comprise entre 0 et p. Cette relation met en évidence que la dynamique de l'analyse monochromatique des dénivelés de la surface d'onde est limitée à la longueur d'onde d'analyse. La dynamique d'un dénivelé de la surface d'onde est définie comme l'écart entre la valeur maximale et la valeur minimale de ce dénivelé. En particulier, l'analyse du dénivelé d'une surface d'onde ne présentant que deux segments séparés d'une hauteur h supérieure à $\lambda_i$ donne un résultat ambigu puisqu'il est à $\lambda_i$ près :

$$h = \frac{\lambda_i s_i}{p}, \texttt{modulo}(\lambda_i) \qquad (1b)$$

Si l'on considère deux mesures obtenues pour deux longueurs d'onde $\lambda_1$ et $\lambda_2$ avec $\lambda_2$ supérieure, les deux interférogrammes déformés par la surface d'onde peuvent être traités conjointement. Pour cela, on mesure le décalage en translation s entre le profil d'intensité du premier interférogramme élémentaire déformé et le profil d'intensité du second interférogramme élémentaire déformé défini par :

$$s = s_1 - s_2 = hp\left(\frac{1}{\lambda_1} - \frac{1}{\lambda_2}\right) \qquad (2)$$

Où $S_1$ et $S_2$ sont les décalages en translation du profil d'intensité sinusoïdal aux deux longueurs d'onde $\lambda_1$ et $\lambda_2$.

Il devient alors possible d'analyser les dénivelés de la surface d'onde avec une dynamique supérieure à $\lambda_i$ et de les définir sans ambiguïté sur une plage de mesure beaucoup plus importante pouvant être adaptée selon le besoin. En effet, par analogie avec l'équation (1), il est possible de mesurer, sans ambiguïté, des dénivelés ayant une dynamique inférieure $\lambda_{eq}$, avec :

$$\lambda_{eq} = \frac{1}{\dfrac{1}{\lambda_1} - \dfrac{1}{\lambda_2}} \qquad (3)$$

Puisque les taux d'accroissement d'une surface d'onde sont proportionnels aux dénivelés, en choisissant $\lambda_2$ suffisamment proche de $\lambda_1$, il devient donc possible de mesurer les taux d'accroissement quelles que soient leurs amplitudes.

Ce procédé peut être généralisé à plusieurs couples de sous-faisceaux et à toute surface d'onde morcelée, à plus de deux morceaux et avec différentes hauteurs entre chacun des morceaux, sous réserve que la dynamique des dénivelés soit inférieure à $\lambda_{eq}$.

Ainsi, on peut obtenir les taux d'accroissement de la surface d'onde incidente selon les directions privilégiées et les décalages latéraux de l'ensemble des couples de sous-faisceaux iso-décalés.

Un traitement basé sur une recombinaison de ces taux d'accroissement pourra alors être effectuée afin de reconstruire la surface d'onde originale.

L'invention a été décrite ci-dessus avec des faisceaux monochromatiques. Cette description n'est pas limitative et peut être généralisée à des faisceaux de deux couleurs différentes.

Il est aussi possible de mettre en oeuvre plus de deux couleurs, afin d'obtenir des dynamiques d'amplitude et des sensibilités adaptées à différentes amplitudes de taux d'accroissement.

L'objet de l'invention est donc un procédé pour l'analyse d'une surface d'onde morcelée d'un faisceau de lumière selon la revendication 1. L'interférogramme déformé par les taux d'accroissement de la surface d'onde incidente peut être vu comme le résultat d'une opération de modulation de phase sur l'interférogramme original. Un traitement de démodulation peut alors être effectué afin de retrouver les taux d'accroissement.

Il est possible d'expliquer ces opérations de modulation et de démodulation en s'appuyant sur le domaine des télécommunications.

Dans le domaine des télécommunications, la modulation de phase est une méthode très courante pour transmettre des informations (ou signal modulant). Un signal porteur subit des déformations liées au signal modulant par une opération de modulation de phase. Le nouveau signal, qui sera transmis, est appelé signal modulé. Afin de retrouver le signal modulant, une technique classique de démodulation consiste à regarder la phase instantanée du signal modulé et à la comparer à la phase instantanée d'un signal de référence, en l'occurrence le signal porteur.

Si la surface d'onde de l'onde incidente est plane, deux interférogrammes élémentaires originaux issus chacun de l'interférence d'un ensemble de couples de sous-faisceaux iso-décalés à deux couleurs différentes présentent une modulation purement sinusoïdale selon la direction privilégiée. Le résultat de la démodulation est un signal constant traduisant l'absence de variation de la phase instantanée et par conséquent la planéité de la surface d'onde.

L'analogie avec les télécommunications, dans le cas particulier de l'utilisation de signaux sinusoïdaux, peut alors se faire en considérant un couple de sous-faisceaux séparément. L'interférogramme élémentaire correspondant à ce couple et une couleur donnés peut être considéré comme un signal porteur. L'interférogramme élémentaire correspondant au même couple mais à une autre couleur peut être considéré comme le signal modulé à démoduler. Le taux d'accroissement, selon la direction privilégiée et le décalage latéral du couple étudié, est alors le signal modulant à retrouver. L'opération de démodulation, qui se déroule ici dans le domaine spatial, consiste alors à regarder la phase locale de l'interférogramme élémentaire à une couleur et à la comparer à la phase locale de l'interférogramme élémentaire à l'autre couleur.

Cette opération de démodulation spatiale peut se faire autant de fois qu'il y a d'ensembles de couples de sous-faisceaux iso-décalés. Ainsi, on peut obtenir les taux d'accroissement de la surface d'onde incidente selon les directions et les décalages latéraux de chacun des ensembles de couples de sous-faisceaux iso-décalés. Les différents taux d'accroissement ainsi obtenus peuvent alors être combinés pour reconstruire la surface d'onde incidente.

Avantageusement, on peut considérer que les au moins deux interférogrammes, formés par l'interférence d'au moins un couple de deux sous-faisceaux iso-décalés, présentent des modulations et que le traitement desdits au moins deux interférogrammes est une démodulation d'un interférogramme en prenant comme modulation de référence l'autre interférogramme pour en déduire au moins un taux d'accroissement.

Le traitement des interférogrammes peut aussi consister à calculer la différence des décalages en translation entre les deux interférogrammes par le calcul de la position des barycentres des taches lumineuses ou par la mesure locale de la position de leur maxima.

Lors du traitement, les taux d'accroissement sont obtenus dans au moins deux directions privilégiées différentes et sont combinés de manière à reconstruire la surface d'onde.

Selon une variante, le réseau de diffraction bidimensionnel (GR) permet d'extraire trois sous-faisceaux dont l'observation en champ lointain forme trois taches placées suivant un triangle isocèle, définissant ainsi trois directions privilégiées, pour reconstruire la surface d'onde et estimer l'erreur sur la mesure à partir de la mesure elle-même.

Dans une autre variante, le réseau (GR) permet d'extraire quatre sous-faisceaux dont l'observation en champ lointain forme quatre taches placées suivant un rectangle.

Il est souhaitable que les plans d'observation ($P_s$) soient tous confondus en un plan commun d'observation et/ou que ce plan commun d'observation ($P_s$) soit optiquement conjugué de la surface morcelée à analyser.

La figure 1 illustre le principe général de la mesure d'une surface d'onde morcelée S à deux morceaux mettant en évidence la zone liée au taux d'accroissement sur l'interférogramme;

La figure 2 est la coupe de l'interférogramme de la figure 1 selon la direction privilégiée II superposée à celle d'une surface plane ;

La figure 3 est la superposition de deux coupes de l'interférogramme de la figure 1 selon la direction privilégiée à deux couleurs différentes ;

La figure 4 illustre un exemple de mise en oeuvre de l'invention pour une application aux optiques segmentées ;

La figure 5 illustre un exemple de mise en oeuvre de l'invention pour une application aux lasers fibrés.

La figure 6 est le schéma optique de principe d'un dispositif permettant la mise en oeuvre de l'invention pour le contrôle de miroirs de télescopes segmentés.

La figure 7 présente un résultat d'analyse obtenu sur une surface d'onde morcelée présentant de nombreux décalages de hauteur.

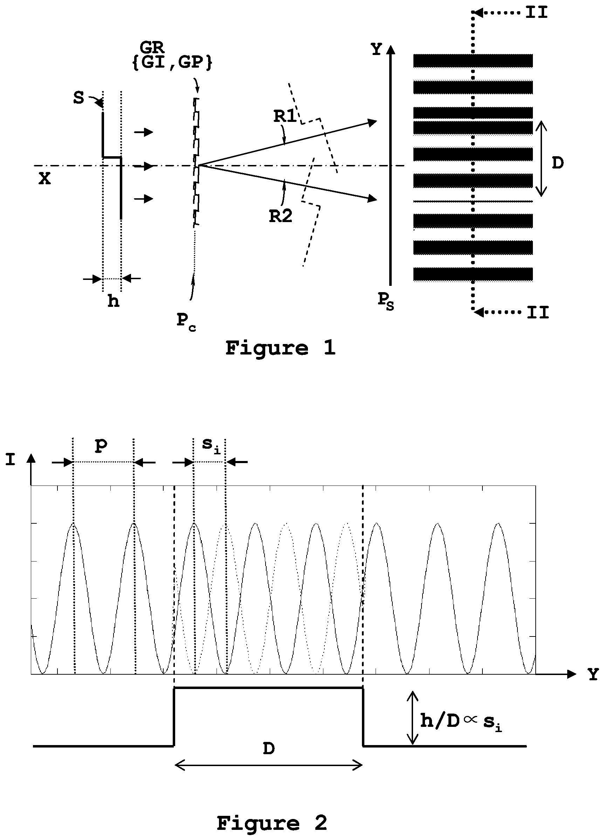

Sur la figure 1, afin d'illustrer de façon la plus simple possible l'invention, le faisceau incident de longueur d'onde $\lambda_i$ qui se propage selon l'axe X présente une surface d'onde S à deux morceaux présentant un dénivelé de hauteur h. Le réseau bidimensionnel GR est placé dans un plan $P_c$ préférentiellement perpendiculaire à l'axe X.

Toujours pour un motif de simplification, seul un couple de sous-faisceaux est pris en compte. Les sous-faisceaux se propagent selon les deux directions particulières R1 et R2, correspondant à deux ordres de diffraction différents, qui forment entre elles l'angle de basculement privilégié et définissent, dans le plan d'observation $P_s$, le décalage latéral D. Le plan $P_s$ est parallèle au plan $P_c$ et est donc lui aussi préférentiellement perpendiculaire à l'axe X.

Ainsi, l'interférogramme observé dans le plan $P_s$ est un interférogramme élémentaire constitué de franges quasi-rectilignes, perpendiculaires à la direction Y, appelée direction privilégiée.

La surface d'onde du faisceau incident n'étant pas plane, l'interférogramme subit des déformations qui se manifestent par deux discontinuités distantes du décalage latéral et qui bornent la zone de taux d'accroissement.

La figure 2 présente la superposition des profils d'intensité de deux interférogrammes élémentaires à une même longueur d'onde $\lambda_i$ selon la direction privilégiée.

Le premier, en trait continu, est celui correspondant à un faisceau incident présentant une surface d'onde plane. Le profil d'intensité est purement sinusoïdal de période p selon la direction privilégiée.

Le second, en traits pointillés, est celui correspondant au faisceau incident de la figure 1. Les trois zones visibles sur l'interférogramme de la figure 1 sont présentes.

Dans les deux zones situées de part et d'autre de la zone de taux d'accroissement, les profils d'intensité se superposent. Ceci traduit le résultat de l'opération de taux d'accroissement. De part et d'autre du décalage latéral, le résultat de l'opération est nul, les surfaces d'ondes analysées étant soit entièrement plane, soit plane de part et d'autre du dénivelé.

En revanche, dans la zone centrale D, le profil d'intensité de l'interférogramme issu de la surface d'onde morcelée présente un déphasage qui se traduit par une translation spatiale $S_i$.

Au niveau des discontinuités apparaît un brusque saut de phase, semblable aux formes d'ondes rencontrées en télécommunication dans les techniques de modulation de phase. Dans cette zone D, le résultat de l'opération de taux d'accroissement n'est pas nul, comme indiqué sur la courbe en bas de la figure 2.

La valeur du taux d'accroissement dans cette zone vaut h/D. Cette valeur est proportionnelle à la translation spatiale $S_i$, qui a pour valeur :

$$s_i = \frac{hp}{\lambda_i} - \left[ \text{Partie Entière}\left( \frac{h}{\lambda_i} \right) \right] p$$

Cette relation met en évidence que la dynamique de l'analyse monochromatique des dénivelés de la surface d'onde est limitée à la longueur d'onde d'analyse.

En particulier, l'analyse du dénivelé d'une surface d'onde ne présentant que deux segments séparés d'une hauteur h supérieure à $\lambda_i$ donne un résultat ambigu puisqu'il est à $\lambda_i$ près :

$$h = \frac{\lambda_i s_i}{p}, \text{modulo}(\lambda_i)$$

Pour augmenter considérablement la valeur de cette longueur d'ambiguïté, il est proposé dans l'invention de procéder à une double mesure. Cette double mesure s'effectue en modifiant uniquement la fréquence du rayonnement incident entre deux mesures, les autres conditions de mesure restant identiques.

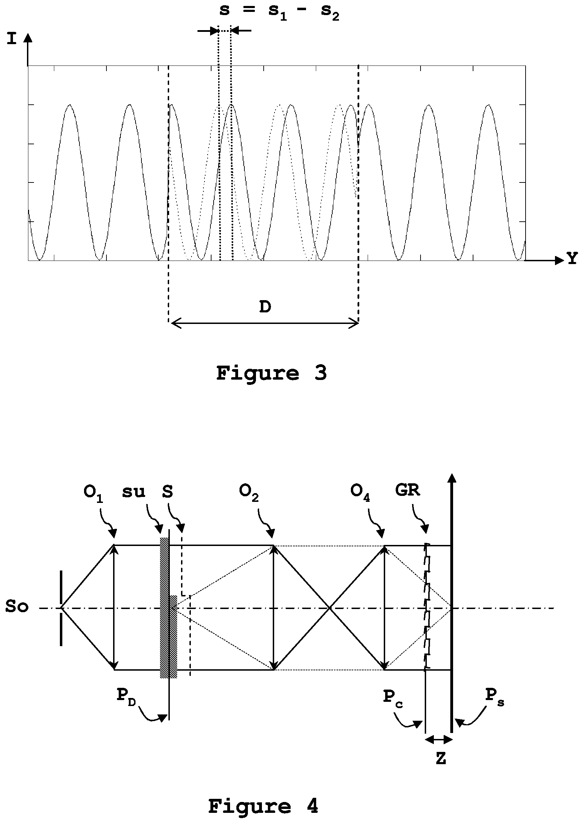

La figure 3 présente la superposition des profils d'intensité de deux interférogrammes élémentaires à deux longueur d'onde $\lambda_1$ et $\lambda_2$ selon la direction privilégiée obtenus avec la surface d'onde morcelée de la figure 1.

Dans les deux zones situées de part et d'autre de la zone des taux d'accroissement, les profils d'intensité se superposent. Comme précédemment, ceci traduit le résultat de l'opération de taux d'accroissement.

La localisation de chaque zone de taux d'accroissement dépendant des directions de propagation R1 et R2 et ces directions pouvant être fonction de la longueur d'onde du faisceau incident, les zones de décalage latéral ne sont pas forcément identiques, cependant elles définissent une zone centrale commune de décalages latéraux.

De part et d'autre des zones de décalage latéral, le résultat de l'opération de taux d'accroissement est nul, la surface d'onde analysée étant plane de part et d'autre du dénivelé.

En revanche, dans la zone centrale commune aux décalages, les profils d'intensité des interférogrammes issus de la surface d'onde morcelée présentent une translation spatiale relative s due aux translations spatiales $S_1$ et $S_2$.

Cette translation spatiale relative s se déduit de la différence des translations spatiales aux deux longueurs d'onde. La translation spatiale s a pour valeur :

$$s = s_1 - s_2 = hp\left( \frac{1}{\lambda_1} - \frac{1}{\lambda_2} \right)$$

Il devient alors possible d'analyser les dénivelés de la surface d'onde avec une dynamique supérieure à $\lambda_i$ et de les définir sans ambiguïté sur une plage de mesure beaucoup plus importante pouvant être adaptée selon le besoin. En effet, par analogie avec l'équation (1), il est possible de mesurer, sans ambiguïté, des dénivelés ayant une dynamique inférieure $\lambda_{eq}$, avec :

$$\lambda_{eq} = \cfrac{1}{\cfrac{1}{\lambda_1} - \cfrac{1}{\lambda_2}} \qquad\qquad (3)$$

Puisque les taux d'accroissement d'une surface d'onde sont proportionnels aux dénivelés, en choisissant $\lambda_2$ suffisamment proche de $\lambda_1$, il devient donc possible de mesurer les taux d'accroissement quelles que soient leurs amplitudes.

Ce procédé, appliqué de façon didactique, à des interférogrammes élémentaires peut être généralisé et appliqué à des interférogrammes obtenus dans des conditions plus réalistes.

Le procédé peut être généralisé à plusieurs couples de sous-faisceaux comme l'ensemble des couples de sous-faisceaux ayant un même décalage latéral selon une même direction dans le plan d'observation. Ces couples de sous-faisceaux sont appelés couples iso-décalés.

Le procédé peut être généralisé à plusieurs ensembles de couples iso-décalés dont les directions privilégiées de chaque ensemble sont différentes.

De même, la généralisation de ce procédé peut concerner la nature de la surface d'onde morcelée qui peut présenter plus de deux morceaux avec des dénivelés de différentes hauteurs entre chacun des morceaux, sous réserve que la dynamique des dénivelés soit inférieure à $\lambda_{eq}$.

Le rayonnement incident peut être un mélange de rayonnements monochromatiques de longueurs d'onde différentes, dans des proportions fixées. Le nombre de couleurs utilisées pour la mesure peut être supérieur à deux afin d'obtenir des dynamiques d'amplitude et des sensibilités adaptées à différentes amplitudes de taux d'accroissement.

Ainsi, après avoir créé, dans les conditions requises, les au moins deux interférogrammes nécessaires au procédé de l'invention, il convient, dans une dernière étape, de les traiter afin d'analyser la surface d'onde.

Dans le brevet FR 2 682 761, le demandeur propose une technique d'analyse des images d'interférence obtenues, afin d'accéder aux gradients de la surface d'onde. Cette technique est directement applicable aux interférogrammes déformés selon la présente invention.

Cette technique est basée sur l'analyse du spectre de l'interférogramme, obtenu par transformée de Fourier. Ce spectre comporte un fondamental et un certain nombre d'harmoniques, notée q(i). Chaque couple d'harmoniques est issu de l'interférence d'un ensemble des couples de sous-faisceaux iso-décalés. Un harmonique contient une information sur le taux d'accroissement de la surface d'onde selon la direction privilégiée et le décalage latéral des couples iso-décalés ayant créés l'harmonique considéré. La transformée de Fourier d'un harmonique q(i) donne une quantité complexe, notée f(i). Un traitement, appelé traitement de restitution, est alors appliqué à f(i) pour obtenir le taux d'accroissement.

Dans l'article, « Three-wave lateral shearing interfermometer », (J. Primot, Applied Optics, vol. 32, n°. 31, 1 novembre 1993) il est proposé de prendre en compte les aberrations du montage en enregistrant un interférogramme de référence, obtenu en l'absence du défaut de surface d'onde à analyser. Des signaux harmoniques q' (i) sont alors calculés à partir de ce second interférogramme. Pour obtenir le taux d'accroissement sans les aberrations du montage selon la direction privilégiée et le décalage latéral du $i^{ème}$ ensemble de couples iso-décalés, on applique le traitement de restitution à f(i) multiplié par la quantité conjuguée de f'(i), où f' (i) est la transformée de Fourier de q'(i). Cette méthode permet donc de mesurer la surface d'onde par rapport à une mesure de référence.

Pour obtenir une dynamique de dénivelés égale à $\lambda_{eq}$, on peut analyser l'interférogramme obtenu à $\lambda_1$ en prenant comme référence l'interférogramme obtenu à $\lambda_2$ d'une manière équivalente à celle adoptée pour soustraire les aberrations du montage. Dans ce cas, on remplace l'interférogramme obtenu sans le défaut à analyser par l'interférogramme obtenu à $\lambda_2$. La quantité obtenue à l'issue de ce traitement de restitution est alors le taux d'accroissement à $\lambda_{eq}$/D près, où D est la taille de la zone centrale commune de décalages latéraux.

D'autres traitements peuvent être appliqués aux interférogrammes.

Par exemple, par l'étude des deux interférogrammes obtenus à $\lambda_1$ et $\lambda_2$, on obtient deux surfaces d'onde ambiguës puisque la dynamique des dénivelés est respectivement limitées à $\lambda_1$ et $\lambda_2$. Il est possible de résoudre cette limitation pour obtenir une dynamique augmentée jusqu'à $\lambda_{eq}$ par un algorithme de comparaison tel que celui proposé par M. Löfdahl et H. Eriksson dans « Resolving Piston ambiguities when phasing a segmented mirror », Proceeding of SPIE, 2000.

Cette technique peut être appliquée dans les cas où les surfaces d'onde étudiées présentent uniquement des segments plans. Dans ce cas, il est suffisant de n'appliquer l'algorithme qu'en un seul point du segment, ce qui est plus rapide qu'un traitement global de la surface d'onde.

Ou encore, par analogie, dans le domaine des télécommunications, la modulation de phase est une méthode très courante pour transmettre des informations (ou signal modulant). Un signal porteur subit des déformations liées au signal modulant par une opération de modulation de phase. Le nouveau signal, qui sera transmis, est appelé signal modulé. Afin de retrouver le signal modulant, une technique classique de démodulation consiste à regarder la phase instantanée du signal modulé et à la comparer à la phase instantanée d'un signal de référence, en l'occurrence le signal porteur.

Si la surface d'onde de l'onde incidente est plane, deux interférogrammes élémentaires originaux issus chacun de l'interférence d'un ensemble de couples de sous-faisceaux iso-décalés à deux couleurs différentes présentent une modulation purement sinusoïdale selon la direction privilégiée. Le résultat de la démodulation est un signal constant traduisant l'absence de variation de la phase instantanée et par conséquent la planéité de la surface d'onde.

L'analogie avec les télécommunications, dans le cas particulier de l'utilisation de signaux sinusoïdaux, peut alors se faire en considérant un couple de sous-faisceaux séparément. L'interférogramme élémentaire correspondant à ce couple et une couleur donnés peut être considéré comme un signal porteur. L'interférogramme élémentaire correspondant au même couple mais à une autre couleur peut être considéré comme le signal modulé à démoduler. Le taux d'accroissement, selon la direction privilégiée et le décalage latéral du couple étudié, est alors le signal modulant à retrouver. L'opération de démodulation, qui se déroule ici dans le domaine spatial, consiste alors à regarder la phase locale de l'interférogramme élémentaire à une couleur et à la comparer à la phase locale de l'interférogramme élémentaire à l'autre couleur.

Cette opération de démodulation spatiale peut se faire autant de fois qu'il y a d'ensembles de couples de sous-faisceaux iso-décalés. Ainsi, on peut obtenir les taux d'accroissement de la surface d'onde incidente selon les directions et les décalages latéraux de chacun des ensembles de couples de sous-faisceaux iso-décalés. Les différents taux d'accroissement ainsi obtenus peuvent alors être combinés pour reconstruire la surface d'onde incidente.

Avantageusement, on peut considérer que les au moins deux interférogrammes, formés par l'interférence d'au moins un couple de deux sous-faisceaux iso-décalés, présentent des modulations et que le traitement desdits au moins deux interférogrammes est une démodulation d'un interférogramme en prenant comme modulation de référence l'autre interférogramme pour en déduire au moins un taux d'accroissement.

Afin de bénéficier pleinement du procédé et de reconstruire directement la surface d'onde analysée, il est préférable, lors du traitement, que les taux d'accroissement soient obtenus dans au moins deux directions privilégiées différentes et soient combinés.

Selon une variante, le réseau de diffraction bidimensionnel (GR) permet d'extraire trois sous-faisceaux dont l'observation en champ lointain forme trois taches placées suivant un triangle isocèle, définissant ainsi trois directions privilégiées, pour reconstruire la surface d'onde et estimer l'erreur sur la mesure à partir de la mesure elle-même, conformément aux enseignements de FR 2 682 761.

Dans une autre variante, le réseau (GR) permet d'extraire quatre sous-faisceaux dont l'observation en champ lointain forme quatre taches placées suivant un rectangle.

Dans le cas d'une surface d'onde dont les déformations sont continues, il est montré dans FR 2 682 761 que la dynamique et la sensibilité du dispositif varient selon la distance z, en particulier, si le plan $P_C$ est confondu avec le plan $P_S$, la sensibilité est nulle.

En revanche, dans le cas des transitions d'une surface d'onde morcelée, la hauteur du taux d'accroissement pondéré par le décalage latéral est indépendante de la distance z, la dynamique et la sensibilité du dispositif sont donc constantes quel que soit z non nulle.

Il est donc souhaitable que les plans d'observation ($P_S$) soient tous confondus en un plan commun d'observation.

Quelques exemples d'application sont illustrés et commentés aux figures 4, 5 et 6.

La figure 4 illustre un exemple de dispositif pour mettre en oeuvre le procédé. Une source lumineuse So est disposée en amont d'une optique de mise en forme $O_1$ d'un faisceau lumineux traversant un substrat gravé à analyser. La source lumineuse So est apte à délivrer au moins deux couleurs différentes. Cette source est, par exemple une source laser ou une source polychromatique associée à des filtres. Le faisceau, après avoir traversé le substrat su, traverse un dispositif afocal, $O_2$ et $O_4$. Ce dispositif a pour fonctions d'une part, d'adapter le diamètre du faisceau, analysé dans le plan $P_D$, aux dimensions du réseau bidimensionnel situé dans un plan $P_C$, et, d'autre part, de conjuguer optiquement le plan $P_D$ où se situe le défaut à analyser préférentiellement avec le plan $P_S$. L'observation est effectuée dans le plan $P_S$.

Le plan $P_C$ est placé à une distance z non nulle du plan $P_S$.

Si le plan conjugué du plan $P_D$ où se situe le défaut à analyser n'est pas exactement conjugué du plan $P_S$, l'analyse est toujours possible mais il s'agit d'un mode dégradé puisque l'interférogramme observé n'est plus déformé exclusivement par le taux d'accroissement.

Il est donc souhaitable que le plan commun d'observation ($P_S$) soit optiquement conjugué de la surface morcelée à analyser.

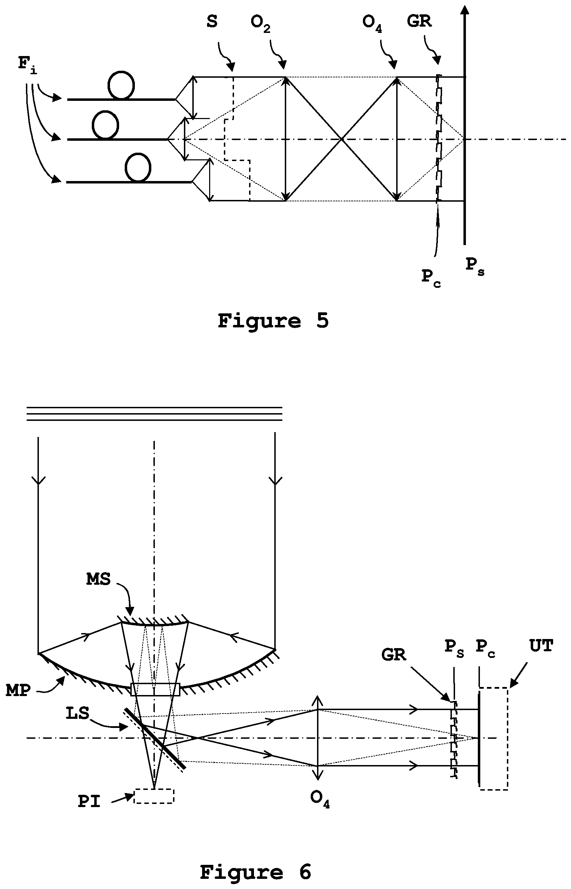

Certains lasers de puissance sont réalisés par la recombinaison cohérente de lasers fibrés, mais la mise en oeuvre de cette recombinaison s'avère difficile. Une solution proposée, illustrée à la figure 5, consiste à apposer les faisceaux collimatés de chaque laser fibré afin de reconstituer un seul faisceau. Pour qu'il y ait recombinaison cohérente, il est nécessaire de s'assurer que tous les faisceaux apposés aient un même état de phase. L'invention permet de définir les décalages entre les fibres $F_i$ et les états de phase relatifs de la surface S qui peuvent alors être compensés avec des moyens acousto-optiques, par exemple.

Sur la figure 6, un télescope observe un objet lumineux très éloigné comme une étoile par exemple et qui génère une surface d'onde plane. Le télescope représenté ici est constitué de deux miroirs : un miroir primaire (MP) et un miroir secondaire (MS). Le miroir primaire est ici constitué de plusieurs segments qu'il faut positionner précisément pour les ramener tous sur une même surface. La lumière collectée par le miroir primaire est amenée, via le miroir secondaire, sur une lame semiréfléchissante (LS). Ainsi, une partie de la lumière, transmise au travers de LS, va vers la partie imagerie (PI) du télescope afin de faire l'image de l'objet lumineux observé. La seconde partie de la lumière, réfléchie par LS, est dirigée vers une lentille $O_4$ qui transforme le faisceau de lumière divergent en faisceau parallèle. Dans le plan d'analyse $P_C$, on place un réseau de diffraction (GR). L'observation est effectuée dans un plan $P_S$, situé dans le plan conjugué de la surface du miroir MP par la lentille $O_4$, permettant ainsi de faire l'analyse de la position des segments du miroir MP.

Si la surface d'onde plane est déformée par la traversée d'un milieu turbulent, la surface d'onde mesurée sera constituée de la superposition, d'une part, de la surface d'onde issue de ces déformations et, d'autre part, de la surface d'onde issue du miroir MP segmenté.

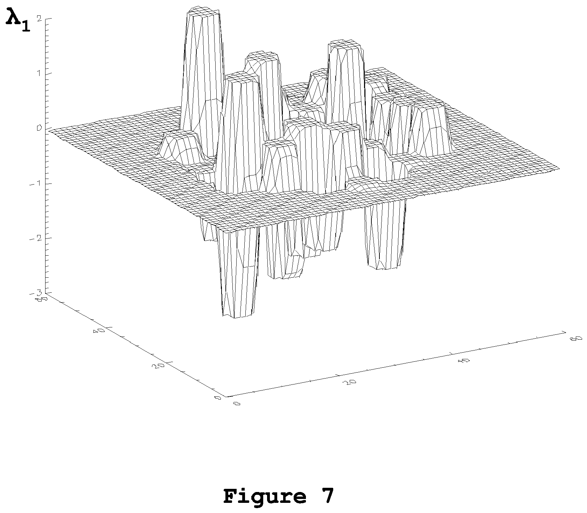

La figure 7 est un exemple de résultat obtenu sur une surface d'onde segmentée issue, par exemple, d'un miroir primaire segmenté type Keck à 36 segments.

**Revendications**

1. Procédé pour l'analyse d'une surface d'onde morcelée d'un faisceau de lumière, ladite surface d'onde morcelée étant une surface constituée par l'apposition discontinue de morceaux de surface présentant des dénivelés entre les morceaux, dans lequel:

   a) on place un réseau de diffraction (GR) à maillage bi-dimensionnel dans un plan (Pc) sur le trajet du faisceau, ce qui provoque une diffraction du faisceau en différents sous-faisceaux (R1, R2) dus aux différents ordres de diffraction ;
   b) on crée et on observe dans des plans ($P_S$) parallèles au plan du réseau (GR) au moins deux interférogrammes formés par l'interférence d'au moins deux sous-faisceaux (R1, R2), chaque interférogramme étant réalisé à une couleur différente, les interférogrammes étant déformés par des déformations dépendant de taux d'accroissement de la surface d'onde incidente, lesdits taux d'accroissement étant proportionnels auxdits dénivelés, et les interférogrammes présentant des discontinuités manifestées par une translation spatiale d'un fragment de sinusoïde;
   c) on mesure le décalage en translation spatiale entre les profils d'intensité des interférogrammes déformés correspondant aux deux couleurs, pour en déduire au moins un taux d'accroissement de la surface d'onde afin d'analyser la surface d'onde.

2. Procédé selon la revendication 1, **caractérisé en ce qu'**à l'opération c) les taux d'accroissement sont obtenus dans au moins deux directions différentes et sont combinés de manière à reconstruire la surface d'onde.

3. Procédé selon l'une des revendications 1 à 2, **caractérisé en ce qu'**à l'opération a), le réseau (GR) permet d'extraire trois sous-faisceaux dont l'observation en champ lointain forme trois taches placées suivant un triangle isocèle.

4. Procédé selon l'une des revendications 1 à 2, **caractérisé en ce qu'**à l'opération a), le réseau (GR) permet d'extraire quatre sous-faisceaux dont l'observation en champ lointain forme quatre taches placées suivant un carré.

5. Procédé selon l'une des revendications 1 à 4, **caractérisé en ce qu'**à l'opération b), les plans d'observation ($P_S$) sont tous confondus en un plan commun d'observation.

6. Procédé selon la revendication 5, **caractérisé en ce qu'**à l'opération b), le plan commun d'observation ($P_S$) est optiquement conjugué de la surface morcelée à analyser.

**Patentansprüche**

1. Verfahren zur Analyse einer Oberfläche einer zerstückelten Welle eines Lichtstrahls, wobei die zerstückelte Welle eine durch diskontinuierliche Apposition von Oberflächenstücken gebildete Oberfläche ist, welche Höhenunterschiede zwischen den Stücken vorsieht, in denen:

a) man ein Beugungsgitter (GR) mit einer zweidimensionalen Vernetzung in einer Ebene (Pc) auf die Bahn des Strahls platziert, was eine Beugung des Strahls in verschiedene Teilstrahlen (R1, R2) auf Grund der verschiedenen Beugungsordnungen hervorruft;

b) man in den Ebenen (P$_S$) parallel zum Gitter (GR) zumindest zwei Interferenzmuster erzeugt und beobachtet, die durch die Interferenz von zumindest zwei Teilstrahlen (R1, R2) gebildet werden, wobei jedes Interferenzmuster in einer verschiedenen Farbe realisiert ist, wobei die Interferenzmuster durch Deformationen deformiert sind, welche von der Steigungsrate der Oberfläche der einfallenden Welle abhängt, wobei die Steigungsrate proportional zu den Höhenunterschieden sind, und die Interferenzmuster Diskontinuitäten aufweisen, die sich durch eine räumliche Verschiebung von Sinuskurven manifestieren,

c) man eine Phasenverschiebung in räumlicher Verschiebung zwischen den Intensitätsprofilen der deformierten interferenzmuster misst, die zu zwei Farben korrespondieren, um daraus zumindest eine Steigungsrate der Wellenoberfläche abzuleiten, um die Wellenoberfläche zu analysieren.

**2.** Verfahren nach Anspruch 1,
**dadurch gekennzeichnet, dass** bei Arbeitsgang c) die Steigungsraten in zumindest zwei unterschiedliche Richtungen erhalten werden und der Art kombiniert werden, um die Wellenoberfläche zu rekonstruieren.

**3.** Verfahren nach einem der Ansprüche 1 bis 2,
**dadurch gekennzeichnet, dass** bei Arbeitsgang a), das Gitter (GR) erlaubt, drei Teilstrahlen zu extrahieren, deren Beobachtung in einem entfernten Feld drei Flecken bildet, die einem gleichschenkligen Dreieck folgend platziert sind.

**4.** Verfahren nach einem der Ansprüche 1 bis 2,
**dadurch gekennzeichnet, dass** bei Arbeitsgang a), das Gitter (GR) erlaubt, vier Teilstrahlen zu extrahieren, deren Beobachtung in einem entfernten Feld vier Flecken bildet, die einem Quadrat folgend platziert sind.

**5.** Verfahren nach einem der Ansprüche 1 bis 4,
**dadurch gekennzeichnet, dass** bei Arbeitsgang b), die Beobachtungsebenen (P$_S$) alle in eine gemeinsame Beobachtungsebene zusammenfallen.

**6.** Verfahren nach Anspruch 5,
**dadurch gekennzeichnet, dass** bei Arbeitsgang b), die gemeinsame Beobachtungsebene (P$_S$) optisch mit der zu analysierenden optischen Oberfläche konjugiert ist.

**Claims**

**1.** A method for analyzing of a divided wavefront of a light beam, said divided wavefront being a surface consisting of the discontinuous application of the surface parts having differences in level between parts, wherein

a) a diffraction grating (GR) with a two-dimensional meshing is positioned in one plane (P$_C$) on the path of the beam to cause the beam to be diffracted into different sub-beams (R1, R2) due to the diffraction orders;

b) there are created and observed in planes (P$_S$) parallel to the plane of the grating (GR) at least two interferograms formed by the interference of at least two sub-beams (R1, R2), each interferogram being implemented with a different color, the interferograms being deformed by deformations depending on increase rates of the incident wavefront, said increase rates being proportional to said differences and the interferograms having discontinuities exhibited by a spatial translation of a fragment of sinusoid;

c) the spatial translation shift between the intensity profiles of the deformed interferograms corresponding to the two different colors is measured processed for deriving from it at least one increase rate of the wavefront in order to analyze the wavefront.

**2.** A method according to claim 1, **characterized in that** at the operation c) the increase rates are obtained in at least two different directions and are combined to rebuild the wavefront.

**3.** A method according to one of claims 1 to 2, **characterized in that** at the operation a) the grating (GR) allows for extracting three sub-beams, the observation of which in a distant field forms four spots positioned according to an isosceles triangle.

**4.** A method according to one of claims 1 to 2, **characterized in that** at the operation a) the grating (GR) allows for extracting four sub-beams, the observation of which in a distant field forms three spots positioned according to a square.

**5.** A method according to one of claims 1 to 4, **characterized in that** at the operation b) the observation planes ($P_S$) are all confused in one common observation plane.

**6.** A method according to claim 5, **characterized in that** at the operation b) the common observation plane ($P_S$) is optically conjugated with the divided wavefront to be analyzed.

**Figure 1**

**Figure 2**

$$s = s_1 - s_2$$

**I**

**D**

**Y**

**Figure 3**

$O_1$  su  S  $O_2$  $O_4$  GR

So

$P_D$  $P_C$  $P_s$

Z

**Figure 4**

**Figure 5**

**Figure 6**

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2712978
- EP 1505365 A

- FR 2795175
- FR 2682761

**Littérature non-brevet citée dans la description**

- **D. MALACARA.** Optical Shop Testing. Wiley-Interscience, 126-127
- **J.C.WYANT.** Phase measurements systems for adaptive optics. *AGARD Conf. Proc.,* 1981
- **J. PRIMOT.** Theoretical description of Shack-Hartmann wave-front sensor. *Optics Communications,* 2003
- **D. MALACARA.** Optical Shop Testing. Wiley-Interscience

- **J.C. CHANTELOUP.** Multiple-wave lateral shearing interferometry for wave-front sensing. *Appl. Opt.,* 2005, vol. 44, 1559-1571
- **J. PRIMOT.** Three-wave lateral shearing interfermometer. *Applied Optics,* 01 Novembre 1993, vol. 32 (31
- **M. LÖFDAHL ; H. ERIKSSON.** Resolving Piston ambiguities when phasing a segmented mirror. *Proceeding of SPIE,* 2000